Europäisches Patentamt

European Patent Office

Office européen des brevets

(11) Publication number: **0 076 494**
**B1**

# EUROPEAN PATENT SPECIFICATION

(45) Date of publication of patent specification: 24.08.88

(51) Int. Cl.⁴: **G 06 F 13/00,** G 06 F 15/16

(21) Application number: 82109102.2

(22) Date of filing: 01.10.82

(54) Data transmission bus system for a plurality of processors.

(30) Priority: 07.10.81 JP 158742/81
18.01.82 JP 4991/82
20.01.82 JP 5945/82

(43) Date of publication of application:
13.04.83 Bulletin 83/15

(45) Publication of the grant of the patent:
24.08.88 Bulletin 88/34

(84) Designated Contracting States:
CH DE FR GB IT LI NL SE

(56) References cited:
BE-A- 889 211
FR-A-2 232 007
FR-A-2 328 249

COMPUTER DESIGN, vol. 19, no. 2, February
1980, pages 137-144, Tulsa Okla (USA);
"Multiprocessing system mixes 8- and 16-bit
microcomputers"

(73) Proprietor: Hitachi, Ltd.
5-1, Marunouchi 1-chome
Chiyoda-ku Tokyo 100 (JP)

(72) Inventor: Takakura, Mitsuro
546-4, Kouya
Katsuta-shi Ibaraki-ken (JP)
Inventor: Shimoyama, Kazuhiko
894-9, Tadeda
Katsuta-shi Ibaraki-ken (JP)
Inventor: Okamoto, Tadashi
4-6-1-203, Suwa-cho
Hitachi-shi Ibaraki-ken (JP)
Inventor: Azusawa, Noboru
1193-8, Higashiishikawa
Katsuta-shi Ibaraki-ken (JP)
Inventor: Yoshida, Takenari
1723-8, Toukai-mura Naka-gun
Ibaraki-ken (JP)
Inventor: Saito, Yutaka
1-36-3-203, Nishinarusawa-cho
Hitachi-shi Ibaraki-ken (JP)
Inventor: Sakurai, Takakazu
2106-5, Motoyoshida-cho
Mito-shi Ibaraki-ken (JP)
Inventor: Kitani, Susumu
3844, Kizaki-nicho
Hirachiohta-shi Ibaraki-ken (JP)

EP 0 076 494 B1

Courier Press, Leamington Spa, England.

**0 076 494**

Inventor: **Kikuchi, Yuji**
**3-9-15, Kokubu-cho**
**Hitachi-shi Ibaraki-ken (JP)**
Inventor: **Kamigane, Yoshihiro**
**3-15-17, Ouse-cho**
**Hitachi-shi Ibaraki-ken (JP)**

(74) Representative: **Strehl, Peter, Dipl.-Ing. et al**
**Strehl, Schübel-Hopf, Schulz Patentanwälte**
**Widenmayerstrasse 17 Postfach 22 03 45**
**D-8000 München 22 (DE)**

Description

The present invention relates to a data transmission system having a plurality of processing units, and more particularly to a data transmission system for transmitting data among a plurality of processing unit through a bus.

It has been known to conduct distributive processing by a plurality of processing units connected to a bus. For example, in a field of plant control, computers are connected to a data way which is a common bus, through stations and results of processing by those computers are supplied to a process input/output unit to control a plant. In a field of a computation control, a plurality of processing units are connected to a bus and data are transmitted thereamong to effect distributive processing by those processing units.

A data transmission system of the type set forth in the first part of claim 1 is known from BE—A—889 211. Transmission of data is controlled in the known system by a controller which generates clock and synchronization pulses. Each linkage unit includes an address counter advanced by the clock pulses and synthronized by the synchronization pulses. When the counter reaches a count that corresponds to a specific number allotted to the respective linkage unit, the contents of a certain area of its memory are transmitted to a corresponding area in the memories of all other linkage units. The memory contents of all linkage units are thus cyclically updated.

Due to the fact that the controller just includes a clock generator for controlling the transmission of data from and to the linkage units, the order in which the individual units are enabled to transmit their data is fixed for any given system. Furthermore, since clock pulses are transmitted and counted separately in each linkage unit, if a failure in the transmission of the clock pulses to, or miscounting in, a linkage unit occurs, simultaneous data transmission from more than one unit will occur with the result of data garbling. Such malfunction is particularly serious in a transmission system which includes an input/output unit. Also, the faulty operation will continue until the counter in the respective linkage unit is readjusted.

It is an object of the invention to provide a data transmission system which readily allows modification of the transmission order, while at the same time achieving higher transmission reliability.

The invention meets with this object by a data transmission system as called for in claim 1. Since the controller generates address systems, the linkage units are individually addressed. By externally setting the order in which the address signals are sequentially generated by the controller, it becomes possible to give preference to certain linkage units and/or the input/output unit in such a manner that, in a given addressing cycle, these are addressed more often than others. Due to the use of address signals, any error that may occur in transmission of the address signal will have an effect only during that part of the cycle. As a further advantage, no address counters are required in the individual linkage units.

While the use of address signals is known from FR—A—2 328 249, that system is not a distributive processing system as defined in the first part of claim 1. Instead, data are transmitted at any time only between a central control computer and a specific one out of a number of individual processors.

Embodiments of the invention will now be described in connection with the drawings, in which

Figure 1 shows a block diagram of a schematic configuration of the present invention,

Fig. 2 shows a block diagram for explaining the present invention,

Fig. 3 shows a detailed block diagram of an address controller,

Figs. 4a and 4b show charts for explaining the operation,

Fig. 5 shows a detailed block diagram of a linkage unit,

Fig. 6 shows a time chart for explaining the operation of Fig. 5,

Fig. 7 shows a flow chart of the operation, and

Figs. 8 to 11 show other embodiments of the present invention.

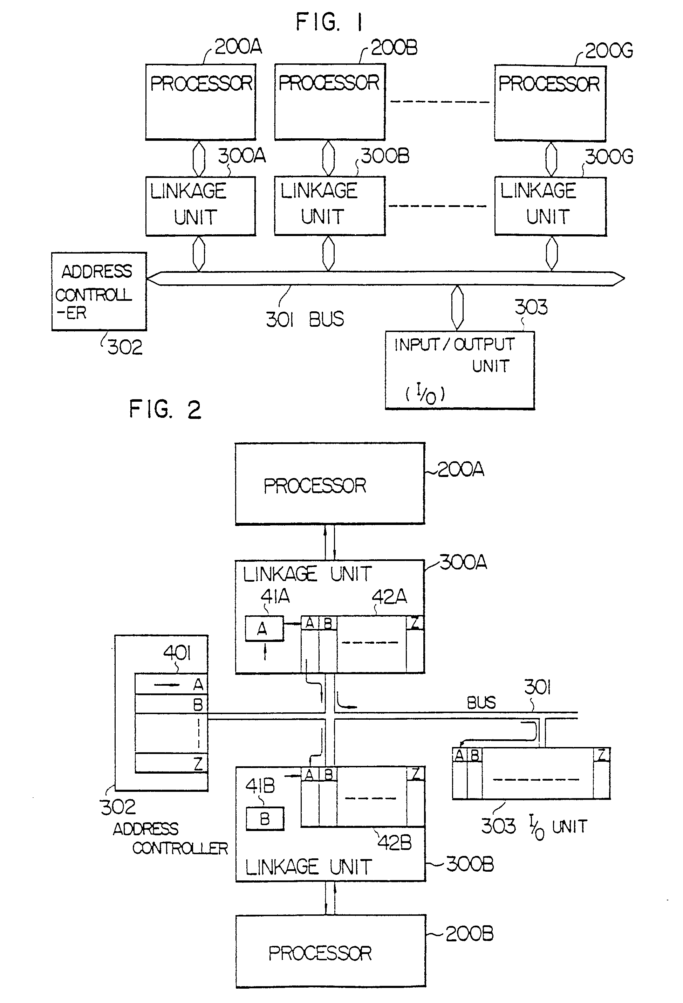

Referring to Fig. 1, there is shown a block diagram of one embodiment of the present invention. Numerals 200A—200G denote processors each having a function to independently carry out computation processing. The processors 200A—200G are usually computers. Numeral 301 denotes a bus. Numerals 300A—300G denote linkage units arranged between the processors 200A—200G and the bus 301. The linkage units 300A—300G will be explained in detail later. Numeral 303 denotes an input/output unit which controls data exchange with the processors 200A—200G. Numeral 302 denotes an address controller which generates an address signal to transfer data between the linkage units 300A—300G and the input/output unit 303. In the present configuration, the processors 200A—200G each receives data necessary for the processing through the memory in the linkage unit from the input/output unit or other processor. Accordingly, each linkage unit must store the data necessary for the processing by the processor. The storage of the data will be discussed later. The processors 200A—200G are conventional computers which output results of processing. Those outputs are not directly supplied to the input/output unit or other processor but supplied to the linkage units 300A—300G. A manner of transmission of the results of the processing by the processors to other processors or the input/output unit requiring the results will be described later. Thus, the processors 200A—200G directly exchange the data with the linkage units 300A—300G without effecting occupation control

3

for the bus 301. Accordingly, the processors can carry out the necessary processing without affecting other processors and output the results of the processing independently from other processors. Accordingly, the processing speed of each processor is enhanced because the bus occupation control is not necessary.

The linkage units 300A—300G preferably have abilities to independently exchange the data with the corresponding processors 200A—200G and exchange the data with other processors and the input/output unit. For this purpose, the memories contained therein are preferably two-port memories which are bilaterally accessible for reading and writing.

On the other hand, the data transfer from one linkage unit to other linkage unit or the input/output unit and the data transfer from the input/output unit to all linkage units are carried out through the bus 301. The bus occupation depends on the address generated by the address controller. One of the linkage units or the input/output unit having the address generated by the address controller 302 in a data output area (that is, as a data sending source) occupies the bus 301. The unit which has occupied the bus 301 sends out the data stored at the specified address, and all of the other units having that address in data input (write) areas receive the data sent out to the bus. To this end, address ranges of the memories, which store the data, of the linkage units and the input/output unit are identical and the addresses in the output areas are allotted to prevent collision among the units. Let us assume that the address controller 302 sends out an address to select the linkage unit 300A to the address bus of the bus 301. As a result, the linkage units 300A—300G check if it is the address to select themselves. Since the address in the present example is to select the linkage unit A, the linkage unit 300A sends out the data stored in the output area of the internal memory to the data bus of the bus 301. On the other hand, other linkage units and the input/output unit receive the address and determine that the address is not to select themselves, and receive the data sent out to the bus. Thus, all other units connected to the bus store the data which the selected unit has sent out to the bus in their internal memories. The address controller 302, sequentially generates addresses in a sequence of, for example, 300A, 300B, 300C, ... 300G and 303. For each case, the selected unit sends out the data stored in the output area to the bus and the other units store the data in the corresponding areas of the internal memories. In this manner, a multi-destination communication is attained in which one of the units is a data sending source and the other units are data receiving units.

The operation of the system of Fig. 1 is now explained in further detail with reference to Fig. 2. Fig. 2 shows a system conceptual view for explaining the operation. The address controller 302 has an address table 401 and sends out one of addresses contained in the table 401 to the bus 301. The send-out of the addresses is cyclically carried out in a predetermined order. On the other hand, the linkage unit 300A stores an address which allots itself to the data sending source in source registers 41A and 41B and checks if the contents "A" and "B" coincides with the address from the address controller 302. When the corresponding address is generated by the address controller 302, for example, when the address "A" is generated, the linkage unit 300A determines that its own unit is selected and sends out the data stored in the output area to the bus 301. Thus, the linkage unit 300A as the data sending source sends out the content (data) of an area A defined as the output area of the internal memory 42A to the data bus of the bus 301. The other units readily determine that the address "A" is not to the access to themselves. Accordingly, the other units, after the generation of the address "A", write the data sent out to the data bus of the bus 301 (the data stored in the output area of the internal memory of the linkage unit 300A) to the input areas A of their internal memories. Since the address is cyclically and sequentially updated, the data stored in all of the linkage units and the input/output unit are sequentially renewed. The data stored in the memories include the results of processing of all of the processing units and the input data from the input/output unit so that each processor can receive any necessary data to carry out a necessary processing.

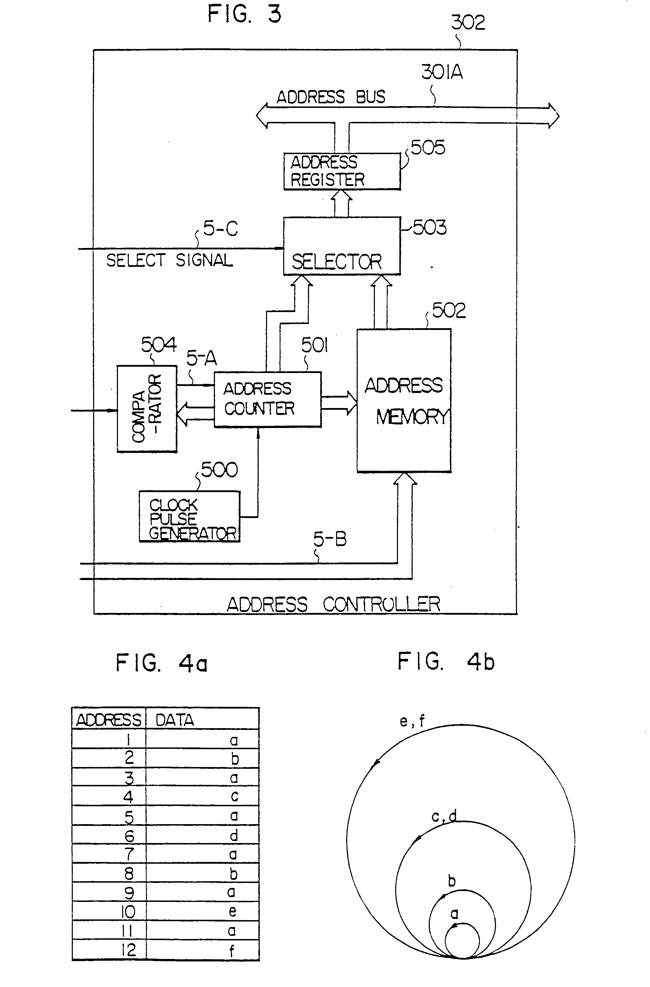

A specific configuration of the address controller 302 is now explained with reference to Fig. 3. Numeral 500 denotes a clock pulse generator which generates a reference clock pulse and numeral 501 denotes a counter which counts up the clock pulses. It is called here an address counter. An output from the counter 501 is an address signal for the data transmission. It is called a first address signal. Numeral 504 denotes a comparator which produces a counter reset signal 5—A when the count of the address counter reaches to a predetermined value. It is provided to allow cyclic counting. Numeral 502 denotes an address memory which stores an address signal to transfer the data to an area of the address corresponding to the count of the counter 501. The address signal read from the counter is called a second address signal. Numeral 5—B denotes a signal line for setting the second address signal. The second address signal is set to the address memory 502 by a console (not shown) through the signal line 5—B. Numeral 503 denotes a selector which selectively supplies one of the count of the address counter 501 (first address signal) and the output of the address memory 502 accessed by that count (second address signal) to an address register 505 as the address signal for the data transmission. The selector 503 passes one of the above signals by a selection signal supplied (from the console) through a signal line 5—C. Numeral 505 denotes the address register which receives the address signal for the data transmission and sends it out to the address bus 301A of the bus 301. The address controller 302 is not necessarily constructed in the above manner, but the above construction is preferred in that the output of the address counter can be used as the address signal or the content of the address memory read out in accordance with the counter output can be used as the address signal. Depending on a manner in which the address signal stored in the address memory 502 (second address signal) is set, a freedom of the data transfer of the linkage units and the input/output unit is attained. When data transfer frequency to the units which require the high transfer frequencies required by the respective units are different, it is possible to allot high transfer frequency, and low transfer frequency to other units. The function which allows setting of any number of times of access to the units while taking the frequency of the data sending source unit into consideration is called a multi-polling function.

A manner to achieve the multi-polling function is now explained. As shown in Fig. 4a, the second address signal is set to the address memory 502. This is effected by externally storing the address signals a, b, c, d, e and f to the addresses (1—12 in the illustrated example) of the address memory through the signal line 5—3. Turning back to Fig. 3, when the output of the address counter 501 which has counted the clock pulse is "1", the address memory 502 supplies the address signal "a". Let us assume that the selector 503 now selects the address memory. The address signal "a" is registered in the address register 505 and sent out to the address bus 301A. As a result, the linkage units or the input/output unit having the address "a" in the output area is selected and a multi-destination communication is effected using that unit as the data sending source. When the output of the address counter 501 reaches "2", the address memory 502 produces the address signal "b" (see Fig. 4a). As a result, the unit having the address "b" in the output area is selected to carry out the data transmission. Then, when the output of the address counter 501 reaches "3", the signal "a" is again produced because the address signal "a" has been set at the address "3" of the address memory 502. As a result, the unit having the address "a" in the output area is again selected and the data transfer is carried out in a similar manner. In this manner, by allotting the address signal to be set in the address memory in accordance with the frequency of the data sending source unit for the data transmission, the multi-polling is attained. If all of the units have the same transfer frequency, the address signals may be allotted to the addresses of the address memory at an equal frequency, or the output of the counter 501 may be directly used as the address signal. Fig. 4b shows access frequencies for the addresses "a" — "f" when the address signals are allotted as shown in Fig. 4a. In Fig. 4b, a smaller diameter has a higher freqency.

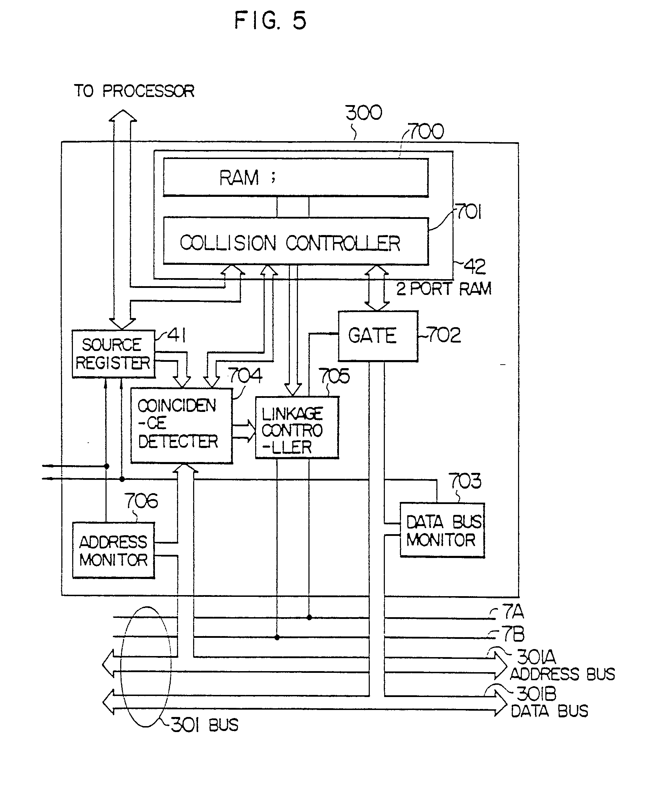

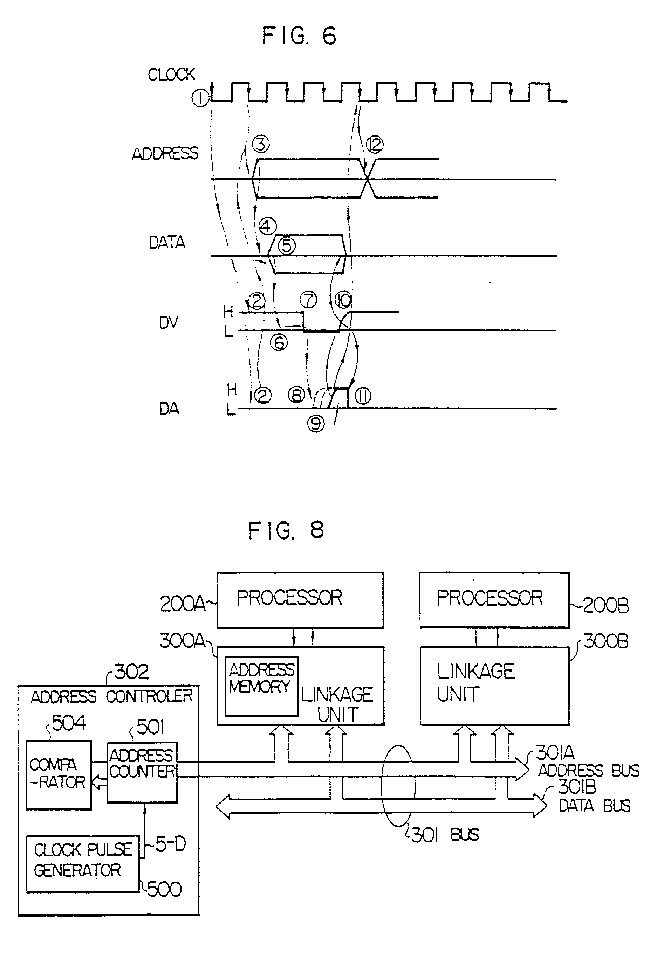

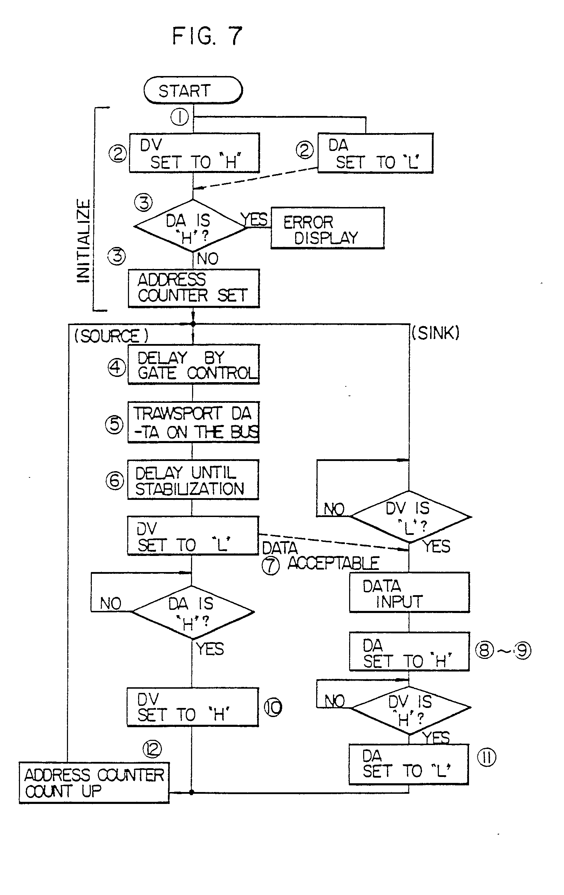

Now, explanation will be made of, referring to Fig. 5, a specific configuration of the linkage unit which receives the address signal generated by the address controller and determines whether its own unit is the data sending source (SOURCE) or the data receiving unit (SINK) to carry out the data transmission. In Fig. 5 showing the linkage unit 300, numeral 41 denotes a register which registers a data (source data) to determine if the linkage unit has been selected by the address signal (that is, as the data sending source). It is called a source register. The source data is registered for each unit when the system is powered up. It is necessary that the registered content corresponds to the setting content of the address signal of the address controller. Numeral 42 denotes an internal memory which is a 2-port rewritable memory. The memory 42 comprises a random access memory (RAM) 700 and a collision controller 710 which controls the data access from the bus and the data access from the computer (processor) to prevent the collision thereof. Numeral 704 denotes a coincidence detector (comparator) which compares an input address signal with the source data and produces a compare equal signal when they are equal. An output gate is controlled by the compare equal signal, and an input gate is controlled by a compare unequal signal. It also decodes the input address signal to select the corresponding address of the internal memory. Numeral 705 denotes a linkage controller which receives the compare equal signal and exchanges signals of data transfer acknowledgement and end of data transfer between the sending source and the receiving unit to define timing of the data transfer. Numeral 703 denotoes a data bus monitor which monitors any abnormal state of the data bus. Numeral 706 denotes an address monitor which monitors the address. Numeral 702 denotes a gate which is controlled by a gate control signal from the linkage controller 705. When the coincidence detector 704 produces the compare equal signal, the controller 705 produces a signal (for example, "H" level) to open the data output gate, and otherwise produces a signal (for example, "L" level) to open the data input gate. The operation of the linkage unit 300 shown in Fig. 7 is now explained. When the address signal is sent out to the address bus 301A, the coincidence detector 704 receives the address signal and compares it with the source data stored in the source register 41. Either the compare equal or compare unequal signal is supplied to the linkage controller 705. The result of decoding of the address signal, that is, the memory selection signal corresponding to the address signal is supplied to the internal memory 42. The address monitor 706 checks the address signal for a parity check and a time-out check to determine if the signal was transmitted within a predetermined time. If an error is detected by the check, a signal is supplied to the coincidence detector 704 to stop the operation thereof. This signal is also utilized as an error signal to be externally reported. The internal memory 42 responds to the input memory selection signal to supply the data at the corresponding address of the RAM 700 to the gate 702. The collision controller 701 imparts a higher priority to the output of the coincidence detector 704 than to the access from the computer. Normally, the computer (processor) reads and writes necessary data from and to the internal memory asynchronously and independently from the bus. The data transfer timing is discussed here. The linkage controller 705 controls the timing. A signal line 7A for carrying a signal DV (data valid) indicating the validity of the data on the data bus and a signal line 7B which carries data acceptance signals DA supplied from N—1 receiving units to one data sending source unit are used as the timing signal lines. When one of the linkage units is the data sending source, it supplies the signal DV to the other N—1 units. On the other hand, the signals DA are supplied from the N—1 units to the one unit and they indicate the completion of the data acceptance. A detail of the timing is shown in Fig. 6, in which ①—⑫ show sequence of establishing the timing. The internal operation of the linkage controller 705 is shown in Fig. 7. By utilizing the above function, it is possible to exactly check if only one unit is the data sending source. If more than one sources are selected, the parity check by the data bus monitor 703 would normally detect an error, but if it does not detect the error by some reason the more than one sources can be detected by checking if more than one signals DA are "L" (low) after predetermined time has elapsed. In Fig. 7, ①—⑫ indicate that the processing is carried out in timed relation with Fig. 6.

Next, explanation will be made of an error processing. When an error in the address bus 301A or 301B is detected by the address monitor 706 and the data bus monitor 703 and an error in the processor is detected (by a conventional error detection method), the source data registered in the source register 41 is cleared by the processing in the linkage unit 300. The linkage unit is selected by the address signal so that it looses a chance of data sending source. As a result, the corresponding linkage unit and processor are equivalently disconnected from the bus 301. By disconnecting the error function, a system-down of the entire system can be avoided although the function performance is partially lowered. Since the linkage units store the data required by the processors in their internal memories, even if one of the processors is down by the error, the overall function can be readily backed up by the other N—1 processors.

In the above embodiment, since the linkage units transfer data independently from the processors, the processors do not need the bus occupation control and hence the processing performance is improved. Since the data transfer through the bus can also be carried out independently of the processors, a high data transmission rate and a high data throughput are attained. Since the linkage units store not only the data required by the associated processors but also the data necessary for all other processings, they can readily back up the system. Since the error is independently monitored, only the error portion can be disconnected to avoid the system-down of the entire system. The address can be freely set and the system can be readily modified or expanded. For example, the system expansion may be attained by connecting an additional linkage unit to the bus and connecting an additional processor to the added linkage unit. It is necessary, as a matter of course, to register the address of the added linkage unit in the bus controller. In adjusting the system, the inputs are free so long as the outputs are cut. Therefore, the other processors are not affected and debugging is facilitated.

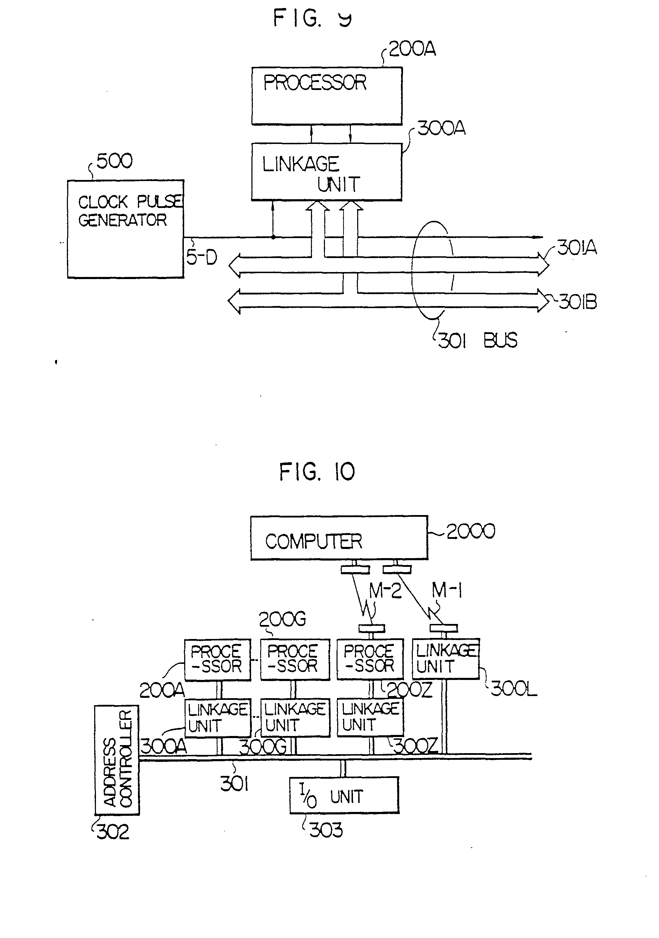

Figs. 8 and 9 show other embodiments of the present invention. In the embodiment shown in Fig. 8, the address controller 302 has no address memory (502 in Fig. 3) but the linkage controller has it. In the embodiment shown in Fig. 9, the address controller is replaced by the clock pulse generator 500 and other functions are carried out by the linkage unit. With those configurations, the address controller may be of simple construction.

Fig. 10 shows another embodiment of the present invention, in which an additional linkage unit and a higher order computer are added to the system shown in Fig. 1. In the figure, numeral 200Z denotes a back-up processor which backs up one of processors 200A—200G when it is down. In the present embodiment, the back-up is carried out by a back-up instruction from a host computer 2000 although it is not always necessary. Numeral 300Z denotes a linkage unit for the back-up processor 200Z, which stores the data on the data bus in its internal memory irrespective of the operation condition of the processor 200Z so that a rapid back-up operation is attained. Numeral 300L denotes a linkage unit arranged to effect the data transmission between the computer 2000 and the processors. The computer 2000 and the linkage unit 300L are coupled via a transmitter M—1, which is a serial transmitter in the present embodiment. Similarly, the computer 2000 and the processor 200Z are coupled via a transmitter M—2. The present embodiment has the following advantages in addition to the features attained by the embodiment of Fig. 3. The back-up processing is carried out very rapidly so that an affect to the overall system is minimized. In addition, since the computer 2000 also serves as one of the processors in the system to carry out the data transmission, a special processing is not necessary and the data transmission efficiency is improved.

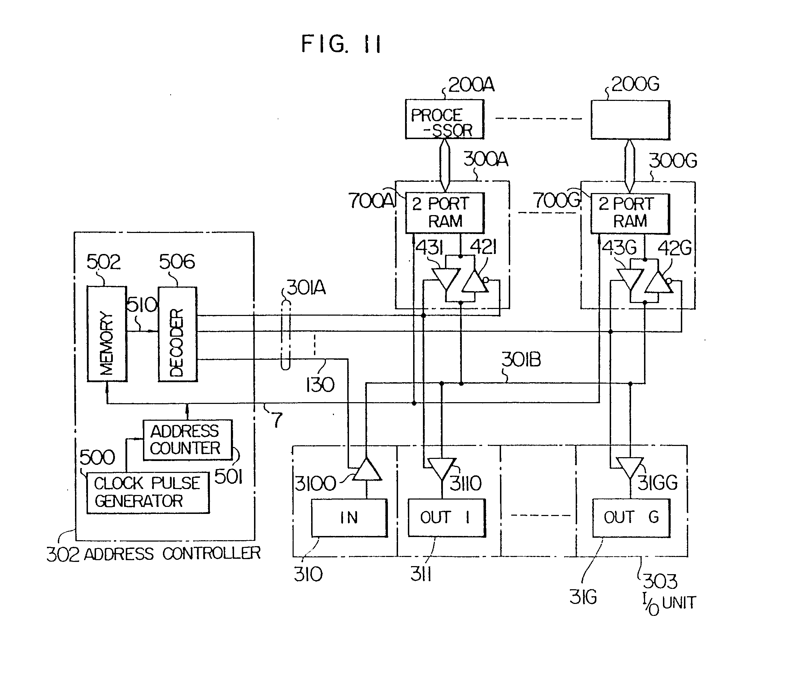

Fig. 11 shows other embodiment of the present invention. The address controller 302 comprises an address counter 501 for generating a transfer address signal, a memory 502 which contains a sending source management table and a decoder 506 for decoding sending source information 510 read out from the memory 502. The decoder 506 supplies gate signals to the address bus 301A to control gates 3100 and 431—43G which send out the data of the input unit 301 and the linkage units 300A—300G which can be the sending source on the data bus 301B and gates 3110—31NN and 421—42N which send out the data on the data bus 301B to two port memories 700A—700G of the output units 311—31G and the linkage units 300A—300G. The above embodiment operates in the following manner.

1) When the data is to be transmitted from the input unit 310 to the processors, the content of the address counter 501 is "a" to indicate such a transmission and the memory 502 supplies the data to indicate that the sending source is the input unit 310. This data is decoded by the decoder 506, which produces a signal 130 to open the gate 3100. Signals to open the gates 431—43G of the linkage units 300A—300G are not supplied to the address bus 301A. Accordingly, the input gates 421—42G which operate complementarily to those signals are opened so that the data is written at predetermined addresses of the memories 700A—700G.

2) When the data is to be transmitted from the processor to the output unit, for example, from the linkage unit 300A to the output unit 311, the content of the address counter 501 is "b" to indicate such a transmission and the memory 502 supplies a data to indicate that the sending source is the processor 200A. This data is decoded by the decoder 506, which produces a signal to open the gates 431 and 3110. Since no other gate control signal is produced, the gates other than the gate 3110 of the input/output unit 303 and the output gates 432—43G other than the gate of the linkage unit 300A are closed. The input gate 421 of the linkage unit 300A is closed and the input gates 422—42G of other linkage units are opened. As a result, the data of the linkage unit 300A is transferred to the output unit 311 and the linkage units 300B—300G.

## Claims

1. A data transmission system comprising
a plurality of processors (200) connected to a common bus (301) for transmitting data,
a controller (302) for generating control signals to control the transmission of data through said bus (301),
linkage units (300) connected between respective processors (200) and said bus (301), each having a memory (42) with individual memory areas (A, B, . . .) allotted to all linkage units (200),
wherein, in response to said control signals, a respective one of said linkage units (300) is designated to transmit data stored in the memory area (A, B, . . .) allotted to the designated linkage unit (300) itself onto said bus (301) while all other linkage units (300) are enabled to receive the data transmitted through said bus (301) and store the received data in the respective memory area (A, B, . . .) allotted to the designated linkage unit (300),
characterised in that an input/output unit (303) is connected to said bus (301) for transmitting data onto, and receiving data from, said bus (301) and having a memory with memory areas (A, B, . . .) allotted to all linkage units (300) and to itself, all said linkage units also having a memory area allotted to said input/output unit (303),
that said controller (302) is an address controller which generates, as said control signals, address signals each designating an individual one of said linkage units (300) or said input/output unit (303), and
that means is provided for externally setting the order in which said address signals are sequentially generated by said address controller (302).

2. A data transmission system according to Claim 1 wherein said address controller (302) includes a clock pulse generator (500) for generating clock pulses, a counter (501) for cyclically counting said clock pulses and an address memory (502) for supplying said address stored therein in accordance with the count of said counter (501), the addresses stored in said address memory (502) being controlled by said external setting means.

3. A data transmission system according to Claim 1 or 2 wherein said memories (42) of said linkage units (300) are two-port random access memories.

4. A data transmission system according to any of Claims 1 to 3, wherein one of said processors is a back-up processor (200Z) for backing up any one of other processors when it is down.

5. A data transmission system according to any of Claims 1 to 3, wherein one of said processors is a host computer (2000) which issues an instruction to back up one of the down processors.

## Patentansprüche

1. Datenübertragungssystem, umfassend
mehrere an eine gemeinsame Busleitung (301) zur Datenübertragung angeschlossene Prozessoren (200),
eine Steuereinheit (302) zur Erzeugung von Steuersignalen für die Steuerung der Datenübertragung über die Busleitung (301),
zwischen die jeweiligen Prozessoren (200) und die Busleitung (301) eingeschaltete Verbindungseinheiten (300), deren jede einen Speicher (42) mit einzelnen, allen Verbindungseinheiten (200) zugeordneten Speicherbereichen (A, B, . . .) aufweist,
wobei je nach den Steuersignalen jeweils eine der Verbindungseinheiten (300) bestimmt wird, Daten, die in dem der bestimmten Verbindungseinheit (300) selbst zugeordneten Speicherbereich (A, B, . . .) gespeichert sind, auf die Busleitung (301) zu übertragen, während sämtliche übrigen Verbindungseinheiten (300) so angesteuert werden, daß sie die über die Busleitung (301) übertragenen Daten empfangen und die empfangenen Daten in jeweils denjenigen Speicherbereich (A, B, . . .) einspeichern, der der bestimmten Verbindungseinheit (300) zugeordnet ist,
dadurch gekennzeichnet,
daß an die Busleitung (301) zur Übertragung von Daten auf die Busleitung (301) und Empfangen von Daten von dieser eine Ein/Ausgabe-Einheit (303) angeschlossen ist, die einen Speicher mit allen Verbindungseinheiten (300) und ihr selbst zugeordneten Speicherbereichen (A, B . . .) aufweist, wobei sämtliche Verbindungseinheiten auch einen der Ein/Ausgabe-Einheit (303) zugeordneten Speicherbereich aufweisen,

daß die Steuereinheit (302) eine Adressen-Steuereinheit ist, die als die besagten Steuersignale Adressensignale erzeugt, deren jedes eine einzelne der Verbindungseinheiten (300) oder die Ein/Ausgabe-Einheit (303) bestimmt, und

daß eine Einrichtung zur externen Einstellung der Reihenfolge vorgesehen ist, in der die Adressensignale sequentiell von der Adressen-Steuereinheit (302) erzeugt werden.

2. Datenübertragungssystem nach Anspruch 1, wobei die Adressen-Steuereinheit (302) einen Taktimpulsgenerator (500) zur Erzeugung von Taktimpulsen, einen Zähler (501) zum zyklischen Zählen der Taktimpulse und einen Adressenspeicher (502) zur Lieferung der besagten, in ihr gespeicherten Adresse in Übereinstimmung mit dem Zählwert des Zählers (501) umfaßt, wobei die in dem Adressenspeicher (502) gespeicherte Adresse durch die externe Einstelleinrichtung gesteuert wird.

3. Datenübertragungssystem nach Anspruch 1 oder 2, wobei die Speicher (42) Speicher mit zwei Anschlüssen und wahlfreiem Zugriff sind.

4. Datenübertragungssystem nach einem der Ansprüche 1 bis 3, wobei einer der Prozessoren ein Reserveprozessor (200Z) zum Ersetzen jedes beliebigen der übrigen Prozessoren bei Ausfall desselben ist.

5. Datenübertragungssystem nach einem der Ansprüche 1 bis 3, wobei einer der Prozessoren ein Hauptrechner (2000) ist, der einen Befehl zum Ersetzen eines der ausgefallenen Prozessoren ausgibt.

**Revendications**

1. Système de transmission de données comprenant

— une pluralité de processeurs (200) raccordés à un bus commun (301) pour la transmission de données,

— un contrôleur (302) servant à produire des signaux de commande servant à commander la transmission des données par l'intermédiaire dudit bus (301),

— des unités de liaison (300) raccordées entre des processeurs respectifs (200) et ledit bus (301) et dont chacune possède une mémoire (42) comportant des zones individuelles de mémoire (A,B, . . .) affectées à toutes les unités de liaison (200),

— et dans lequel, en réponse auxdits signaux de commande, l'une respective desdites unités de liaison (300) est désignée pour émettre des données mémorisées dans la zone de mémoire (A,B, . . .) affectée à l'unité de liaison (300) désignée, elle-même, dans ledit bus (301), tandis que toutes les autres unités de liaison (300) sont validées pour recevoir les données transmises par l'intermédiaire dudit bus (301) et mémoriser les données reçues dans la zone de mémoire respective (A,B, . . .) affectée à l'unité de liaison (300) désignée, caractérisé en ce

— qu'une unité d'entrée/sortie (303) est raccordée audit bus (301) pour l'émission de données dans ledit bus (301) et la réception de données à partir de ce dernier, et comporte une mémoire possèdant des zones de mémoire (A,B, . . .) affectées à toutes les unités de liaison (300) et à elle-même, toutes les unités de liaison possédant également une zone de mémoire affectée à ladite unité d'entrée/sortie (303),

— que ledit contrôleur (302) est un contrôleur d'adresses qui produit des signaux d'adresses constituant lesdits signaux de commande et dont chacun désigne une unité individuelle faisant partie desdites unités de liaison (300) ou ladite unité d'entrée/sortie (303), et

— que des moyens sont prévus pour régler de l'extérieur l'ordre dans lequel lesdits signaux d'adresses sont produits séquentiellement par ledit contrôleur d'adresses (302).

2. Système de transmission de données selon la revendication 1, dans lequel ledit contrôleur d'adresses (302) comporte un générateur (500) d'impulsions d'horloge, servant à produire des impulsions d'horloge, un compteur (501) servant à compter cycliquement lesdites impulsions d'horloge et une mémoire d'adresses (502) servant à délivrer ladite adresse mémorisée en elle, conformément à l'état de comptage dudit compteur (501), les adresses mémorisées dans ladite mémoire d'adresses (502) étant commandées par lesdits moyens de réglage extérieur.

3. Système de transmission de données selon la revendication 1 ou 2, dans lequel lesdites mémoires (42) desdites unités de liaison (300) sont des mémoires à accès direct à deux points d'accès.

4. Système de transmission de données selon l'une quelconque des revendications 1 à 3, dans lequel l'un desdits processeurs est un processeur de réserve (200Z) servant à assister l'un quelconque des autres processeurs lorsqu'il est défaillant.

5. Système de transmission de données selon l'une quelconque des revendications 1 à 3, dans lequel l'un desdits processeurs est un ordinateur principal (2000) qui délivre une instruction pour assister l'un des processeurs défaillants.

**0 076 494**

FIG. 1

FIG. 2

## FIG. 3

302

301A

ADDRESS BUS

ADDRESS REGISTER 505

5-C
SELECT SIGNAL

SELECTOR 503

504
COMPA-RATOR

5-A

ADDRESS COUNTER 501

ADDRESS MEMORY 502

CLOCK PULSE GENERATOR 500

5-B

ADDRESS CONTROLLER

## FIG. 4a

| ADDRESS | DATA |
|---------|------|
| 1 | a |
| 2 | b |
| 3 | a |
| 4 | c |
| 5 | a |
| 6 | d |
| 7 | a |
| 8 | b |
| 9 | a |
| 10 | e |
| 11 | a |
| 12 | f |

## FIG. 4b

e, f

c, d

b

a

2

0 076 494

FIG. 5

TO PROCESSOR

300

700

RAM ;

COLLISION CONTROLLER ~701

~42
2 PORT RAM

SOURCE REGISTER ~41

GATE ~702

COINCIDEN -CE DETECTER 704

LINKAGE CONTRO -LLER 705

ADDRESS MONITOR 706

DATA BUS MONITOR 703

7A
7B
301A
ADDRESS BUS
301B
DATA BUS

301 BUS

3

FIG. 6

CLOCK

ADDRESS

DATA

DV

DA

FIG. 8

200A~ PROCESSOR     PROCESSOR ~200B

300A~

302

ADDRESS CONTROLER

504   501

COMPA -RATOR  ADDRESS COUNTER

CLOCK PULSE GENERATOR ~5-D

~500

ADDRESS MEMORY  LINKAGE UNIT

300B

LINKAGE UNIT

301A ADDRESS BUS

301B DATA BUS

301 BUS

**0 076 494**

## FIG. 7

**START**

① 

② DV SET TO `H`   ② DA SET TO `L`

INITIALIZE

③ DA IS `H`? — YES → ERROR DISPLAY

③ NO

ADDRESS COUNTER SET

(SOURCE)                                              (SINK)

④ DELAY BY GATE CONTROL

⑤ TRAWSPORT DA-TA ON THE BUS

⑥ DELAY UNTIL STABILIZATION

DV SET TO `L`   DATA ACCEPTABLE

⑦ 

NO ← DV IS `L`?

YES

NO ← DA IS `H`?

YES

DATA INPUT

DA SET TO `H`   ⑧~⑨

DV SET TO `H`   ⑩

NO ← DV IS `H`?

YES

⑫ 

ADDRESS COUNTER COUNT UP

DA SET TO `L`   ⑪

5

FIG. 9

PROCESSOR ⌐200A

LINKAGE UNIT ⌐300A

CLOCK PULSE GENERATOR ⌐500

5-D

301A

301B

301 BUS

FIG. 10

COMPUTER ⌐2000

M-2    M-1

PROCE-SSOR  PROCE-SSOR  PROCE-SSOR  LINKAGE UNIT

200G

200A    200Z    300L

LINKAGE UNIT  LINKAGE UNIT  LINKAGE UNIT

ADDRESS CONTROLLER

300A    300G    300Z

301

I/O UNIT

302    303

# FIG. 11

0 076 494